(19) Europäisches Patentamt
European Patent Office
Office européen des brevets

(11) EP 3 199 650 B1

(12) **EUROPEAN PATENT SPECIFICATION**

(45) Date of publication and mention of the grant of the patent:
**18.09.2019 Bulletin 2019/38**

(21) Application number: **15844234.3**

(22) Date of filing: **24.09.2015**

(51) Int Cl.:
***B01J 20/32*** *(2006.01)* ***B01J 20/34*** *(2006.01)*
***C22B 59/00*** *(2006.01)* ***C22B 3/24*** *(2006.01)*
***B01D 15/00*** *(2006.01)* ***C22B 7/00*** *(2006.01)*

(86) International application number:
**PCT/JP2015/076960**

(87) International publication number:
**WO 2016/047700 (31.03.2016 Gazette 2016/13)**

(54) **RARE EARTH ELEMENT ADSORPTION SEPARATION MATERIAL**

ABSCHEIDUNGSMATERIAL FÜR SELTENERDELEMENTADSORPTION

MATÉRIAU DE SÉPARATION PAR ADSORPTION D'UN ÉLÉMENT DE TERRE RARE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2014 JP 2014194202**

(43) Date of publication of application:
**02.08.2017 Bulletin 2017/31**

(73) Proprietor: **Nitto Denko Corporation**
**Ibaraki-shi, Osaka 567-8680 (JP)**

(72) Inventors:
- **MURAKI, Yuzo**
  **Ibaraki-shi**
  **Osaka 567-8680 (JP)**
- **HIGUCHI, Hiroyuki**
  **Ibaraki-shi**
  **Osaka 567-8680 (JP)**
- **NISHIGAWARA, Masaya**
  **Ibaraki-shi**
  **Osaka 567-8680 (JP)**
- **OGATA, Takeshi**
  **Tsukuba-shi**
  **Ibaraki 305-8569 (JP)**
- **NARITA, Hirokazu**
  **Tsukuba-shi**
  **Ibaraki 305-8569 (JP)**
- **TANAKA, Mikiya**
  **Tsukuba-shi**
  **Ibaraki 305-8569 (JP)**

(74) Representative: **Müller-Boré & Partner Patentanwälte PartG mbB**
**Friedenheimer Brücke 21**
**80639 München (DE)**

(56) References cited:
**EP-A1- 3 199 559**
**WO-A1-2014/157225**
**JP-A- 2013 163 861**
**JP-A- 2014 148 738**
**US-A1- 2004 062 695**

- **Ilaiyaraja P. et al: "International Nuclear Information System Diglycolamic acid functionalized PAMAM-SDB chelating resin for removal of Th(IV) from aqueous and nitric acid medium", Board of Research in Nuclear Sciences, Department of Atomic Energy, Mumbai (India); 281 p; 2014; p. 47; SESTEC-2014: DAE-BRNS biennial symposium on emerging trends in separation science and technology; Mumbai (India), 1 February 2014 (2014-02-01), pages 25-28, XP055468146, India Retrieved from the Internet: URL:https://inis.iaea.org/search/search.aspx?orig_q=RN:45077617 [retrieved on 2018-04-18]**
- **TAKESHI OGATA ET AL: "Immobilization of Diglycol Amic Acid on Silica Gel for Selective Recovery of Rare Earth Elements", CHEMISTRY LETTERS, vol. 43, no. 9, 5 September 2014 (2014-09-05), pages 1414-1416, XP055419969, JAPAN ISSN: 0366-7022, DOI: 10.1246/cl.140446**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 199 650 B1

- **TAKESHI OGATA ET AL.: 'Immobilization of Diglycol Amic Acid on Silica Gel for Selective Recovery of Rare Earth Elements' CHEMISTRY LETTERS vol. 43, no. 9, 23 May 2014, pages 1414 - 1416, XP055419969**

## Description

TECHNICAL FIELD

The present invention relates to an adsorption separation material for collecting and recovering rare earth elements, and to a production method of the same.

BACKGROUND ART

Rare earth elements are essential materials necessary for improving performance of an electronic product such as a storage battery, a light emitting diode or a magnet, and are used in a wide range of industrial fields. With respect to the current supply of rare earth elements, a crisis of these resources has been highlighted because the producing countries are almost limited, the price lacks stability, and the demand is expected to surpass the supply in the near future. For these reasons, many attempts have been made to reduce the amount of rare earth element used and to develop a replacement. At the same time, it is also required to recover rare earth elements from natural mineral resources of low grade, or to regenerate (recycle) rare earth elements from in-process scraps produced during manufacture of products or from wastes such as electronic and electric appliances collected from cities.

As to the recovery process of rare earth elements from natural mineral resources of low grade or the wastes, there is a method for selectively separating and recovering dilute rare earth element ions from an aqueous solution containing ions of metals, for example, base metals in a high concentration.

As the method for separating and recovering rare earth element ions, a solvent extraction method using an extracting agent or the like (liquid-liquid extraction method), a column extraction method using an ion exchange resin or the like (solid-liquid extraction method) and the like are known. The solvent extraction method is a method in which an aqueous phase containing an aqueous solution containing metal element to be separated is brought into contact with an organic phase containing an extracting agent for extracting the specific metal element and an organic solvent for diluting the extracting agent, to extract the specific metal element with the extracting agent, thereby separating the specific metal element.

In the solvent extraction method or the column extraction method, a separating agent excellent in extraction ability or adsorption ability for rare earth element ions is used and the rare earth element ions are selectively extracted or adsorbed.

The scientific paper of Ilaiyaraja P. et al, "Diglycolamic acid functionalized PAMAM-SDB chelating resin for removal of Th(IV) from aqueous and nitric acid medium", Board of Research in Nuclear Sciences, Department of Atomic Energy, Mumbai (India)presented at SESTEC-2014: DAE-BRNS biennial symposium on emerging trends in separation science and technology; Mumbai (India), 1 February 2014 (2014-02-01), pages 25-28, discloses removal of radionuclides such as thorium from aqueous medium employing a diglycolamic acid functionalized poly(amido) amine dendron-styrene divinyl benzene PAMAM-SDB chelating resin. The chelating resins are prepared either by impregnating or grafting the chelating agents on solid substrate.

It is known that a diglycolamic acid (DGAA) skeleton containing a carboxylic group ($>N-CO-CH_2-O-CH_2-COOH$, $-NH-CO-CH_2-O-CH_2-COOH$) is effective as a multidentate ligand for the adsorption of rare earth element ions, and a solvent extraction method using an extracting agent and column extraction method using a particulate adsorbent, having the skeleton have been studied. As to the solvent extraction method, for example, a technique for extracting a rare earth element by using a solution in which diglycolamic acid represented by the specific chemical formula is dissolved as an extracting agent is proposed (e.g., Patent Document 1). Furthermore, as to the column extraction method, for example, a technique for separating a rare earth element by column adsorption using an adsorbent in which the specific diglycolamide type ligand is introduced into silica gel surface is proposed (e.g., Non-Patent Document 1).

PRIOR ART DOCUMENT

PATENT DOCUMENT

Patent Document 1: JP-A-2007-327085

NON-PATENT DOCUMENT

Non-Patent Document 1: Tsuyoshi Ogata and Mikiya Tanaka, "Separation and recovery of rare earth element ions by novel adsorbent", Rare Earth, The Rare Earth Society of Japan, May 2013, No. 62, pages 178-179

SUMMARY OF THE INVENTION

PROBLEMS THAT THE INVENTION IS TO SOLVE

Since the solvent extraction method using an extracting agent has a large extraction capacity and enables rapid processing, it is useful for purification and separation of rare earth elements, in which efficient mass processing by continuous process is required, but it has an economic problem because a large-scale equipment and a large amount of organic solvent are necessary. On the other hand, the column extraction method using a particulate adsorbent in which DGAA is introduced into silica gel by silane coupling, has advantages in that an apparatus is simple and operability is easy in comparison with the solvent extraction method, but it has a small adsorption capacity and is susceptible to suspended substances.

The present invention has been made to solve the conventional problems described above, and the object thereof is to provide an adsorption separation material which can selectively adsorb rare earth elements, is simple in apparatus and operation, and is excellent in adsorption and recovery ability.

MEANS FOR SOLVING THE PROBLEMS

The problem described above can be solved by the present invention described below. Specifically, the present invention includes (1) to (5) shown below.

(1) An adsorption separation material for selectively recovering a rare earth element dissolved in an aqueous solution, in which at least one diglycolamic-acid-type ligand represented by the general formula (2) shown below is bonded to a polymer base material by graft polymerization.

[Chem. 1]

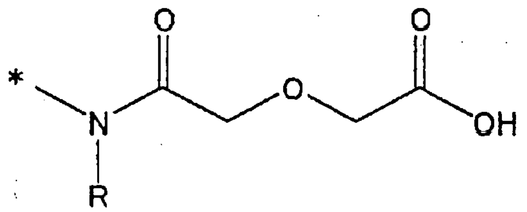

(2)

(in the formula (2), R represents a hydrogen atom, an alkyl group having a carbon number of from 1 to 3, an acyl group having a carbon number of from 1 to 2, or an aldehyde group, and * represents a bond.)

(2) The adsorption separation material as described in (1) above, in which both a secondary amide represented by general formula (2a) shown below and a tertiary amide represented by general formula (2b) shown below are bonded to the polymer base material.

[Chem. 2]

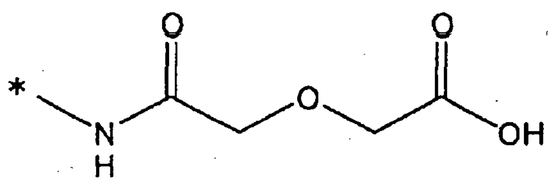

(2a)

(in the formula (2a), * represents a bond.)

[Chem. 3]

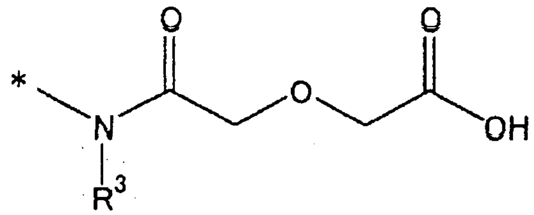

(2b)

(in the formula (2b), $R^3$ represents an alkyl group having a carbon number of from 1 to 3, an acyl group having a carbon number of from 1 to 2, or an aldehyde group, and * represents a bond.)

(3) The adsorption separation material as described in (1) or (2) above, in which the polymer base material is formed from at least one selected from the group consisting of a polyolefin resin, a water-insoluble vinyl alcohol resin, a polyamide resin, and a cellulose resin.

(4) The adsorption separation material as described in any one of (1) to (3) above, in which the polymer base material is at least one selected from the group consisting of a nonwoven fabric, a woven fabric, a non-porous film, a non-porous sheet, a porous film, a porous sheet, a hollow fiber membrane, yarn, and a bead.

(5) A adsorption desorption method of rare earth element including an adsorption step of bringing an aqueous solution containing a rare earth element into contact with the adsorption separation material as described in any one of (1) to (4) above to allow the rare earth element to be adsorbed to the adsorption separation material, and a recovery step of bringing the adsorption separation material in which the rare earth element is adsorbed into contact with an aqueous acid solution to recover the rare earth element and to regenerate the adsorption separation material.

ADVANTAGE OF THE INVENTION

According to the adsorption separation material of the present invention, since the diglycolamic-acid-type ligand is bonded to the polymer base material by a graft polymerization technique, a function of adsorbing rare earth element can be imparted to materials of various shapes, and thereby spreading use environment. Specifically, since an adsorption separation material can be formed in a sheet shape or a braid-like shape and a rare earth element can be adsorbed only by immersing the adsorption separation material in an aqueous solution containing the rare earth element, the large-scale equipment utilized in the conventional solvent extraction method is not necessary. Furthermore, the adsorption from an aqueous solution containing a large amount of suspended substances, which is difficult to use in the conventional column processing method because of causing clogging, is easily performed. Moreover, since the adsorption capacity is large in comparison with the conventional particulate adsorbent, the processing efficiency also increases.

BRIEF DESCRIPTION OF THE DRAWINGS

FIG. 1 is a graph showing the adsorption amounts of metal ions at each pH of Examples and Comparative Examples.

FIG. 2 is a graph showing the adsorption isotherm of dysprosium at each pH of Example 1 and Comparative Example 1.

MODE FOR CARRYING OUT THE INVENTION

The present invention will be described in detail hereinafter.

(Adsorption separation material)

The adsorption separation material of the present invention is obtained by introducing and bonding at least one diglycolamic-acid-type ligand represented by the general formula (2) shown below to a polymer base material by graft polymerization, and is an adsorption separation material in which at least one diglycolamic-acid-type ligand represented by the general formula (2) forms a graft polymerization bond to the polymer base material.

[Chem. 4]

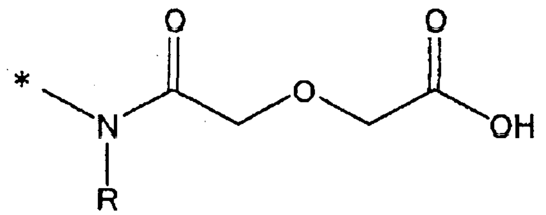

(2)

(In the formula (2), R represents a hydrogen atom, an alkyl group having a carbon number of from 1 to 3, an acyl group having a carbon number of from 1 to 2, or an aldehyde group, and * represents a bond.)

In the general formula (2), the carbon number of the alkyl group for R is preferably from 1 to 2, and more preferably 1. The alkyl group having a carbon number of from 1 to 3 specifically includes a methyl group, an ethyl group and an (iso)propyl group.

In the general formula (2), the acyl group having a carbon number of from 1 to 2 for R may be any of straight-chain, branched chain or cyclic, and includes, for example, an alkylcarbonyl group and the like. The alkylcarbonyl group includes, for example, an acetyl group and the like.

In the general formula (2), the aldehyde group for R includes, for example, a formyl group and the like.

In the present invention, it is sufficient that at least one of the diglycolamic-acid-type ligands represented by the general formula (2) is introduced and bonded to the polymer base material by graft polymerization, and it is preferred that both a secondary amide represented by the general formula (2a) shown below and a tertiary amide represented by the general formula (2b) shown below are bonded.

[Chem. 5]

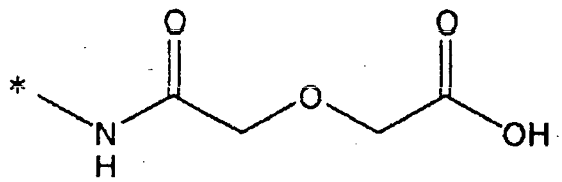

(2a)

(In the formula (2a), * represents a bond.)

[Chem. 6]

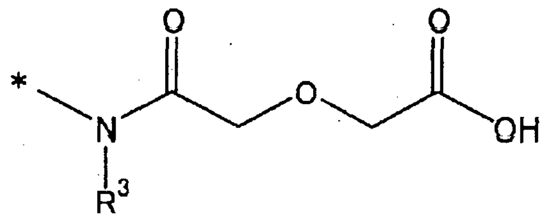

(2b)

(In formula (2b), $R^3$ represents an alkyl group having a carbon number of from 1 to 3, an acyl group having a carbon number of from 1 to 2, or an aldehyde group, and * represents a bond.)

In the general formula (2b), specific examples of $R^3$ are same as those described above.

In order to obtain the adsorption separation material of the present invention in which at least one of the diglycolamic-acid-type ligands represented by the general formula (2) described above forms a graft polymerization bond to a polymer base material by introducing at least one of the diglycolamic-acid-type ligands into the polymer base material by graft polymerization, for example, (i) a method in which a vinyl monomer having at least one diglycolamic-acid-type ligand represented by the general formula (2) is synthesized and the resulting vinyl monomer is introduced into the polymer base material by graft polymerization, (ii) a method in which an amine is introduced into the polymer base material by graft polymerization and an amino group bonded to the polymer base material is allowed to react with

diglycolic anhydride to form the diglycolamic-acid-type ligand represented by the general formula (2), or the like are exemplified. In the present invention, the diglycolamic-acid-type ligand represented by the general formula (2) may be bonded to the polymer base material by any method, and the method (i) in which the vinyl monomer is synthesized first and then the vinyl monomer is introduced into the polymer base material by graft polymerization is preferred from the standpoint of productivity.

<Graft polymerization according to method (i)>

The method of preparing the adsorption separation material by the method (i) is described below.

The vinyl monomer having a diglycolamic-acid-type ligand represented by the general formula (2) which is used to perform the method (i) is a vinyl monomer represented by the general formula (1) shown below.

[Chem. 7]

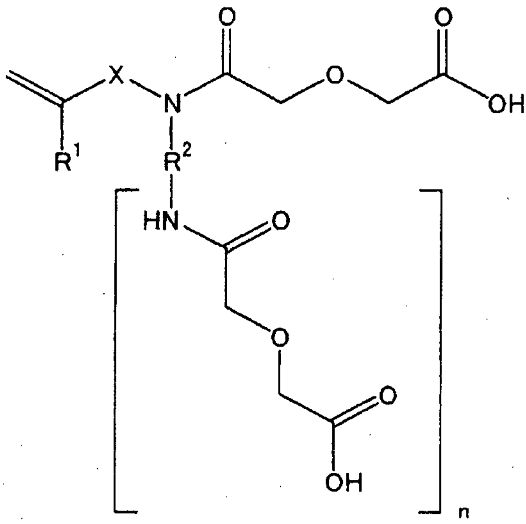

(1)

(In the formula (1), $R^1$ represents a hydrogen atom or an alkyl group having a carbon number of from 1 to 3, X represents a single bond or a divalent organic group having a carbon number of from 1 to 7, which may have a substituent. n represents 0 or 1, when n is 0, $R^2$ represents a hydrogen atom, an alkyl group having a carbon number of from 1 to 3, an acyl group having a carbon number of from 1 to 2, or an aldehyde group, and when n is 1, $R^2$ represents an alkylene group having a carbon number of from 1 to 3.)

In the general formula (1), $R^1$ represents a hydrogen atom or an alkyl group having a carbon number of from 1 to 3. The carbon number of the alkyl group is preferably from 1 to 2, and more preferably 1. The alkyl group having a carbon number of from 1 to 3 for $R^1$ specifically includes a methyl group, an ethyl group and a propyl group.

$R^1$ is preferably a hydrogen atom or an alkyl group having a carbon number of from 1 to 2, and from the standpoint of avoiding hydrophobization of the vinyl monomer of the general formula (1), $R^1$ is particularly preferably a hydrogen atom or a methyl group.

In the general formula (1), X influences chain polymerization reactivity and hydrophilic/hydrophobic property of the vinyl monomer.

X represents a single bond or a divalent organic group having a carbon number of from 1 to 7, which may have a substituent. The carbon number of the organic group is preferably from 1 to 5, and more preferably from 1 to 4.

The divalent organic group which may have a substituent may be any of straight-chain, branched chain or cyclic, and includes, for example, an alkylene group which may have a substituent, an arylene group which may have a substituent, -O-, -C(=O)-, -NH- and groups formed by combination of these groups.

The alkylene group of the alkylene group which may have a substituent includes a methylene group, an ethylene group, a propylene group, and the like.

The arylene group of the arylene group which may have a substituent includes an o-phenylene group, a m-phenylene group, a p-phenylene group, and the like.

The substituent of the alkylene group includes, for example, a hydroxyl group; an alkoxy group such as a

methoxy group and an ethoxy group; an alkoxycarbonyl group such as a methoxycarbonyl group and an ethoxycarbonyl group; and the like.

The substituent of the arylene group includes, for example, an alkyl group such as a methyl group and an ethyl group, and the like.

These substituents may be bonded to any position in the group of the alkylene group, arylene group and the like, and plural number of identical or different substituents may be bonded.

X is preferably a single bond or a divalent organic group having a carbon number of from 1 to 5, which may have a substituent, and more preferably a single bond or a divalent organic group having a carbon number of from 1 to 4, which may have a substituent. From the standpoint of imparting the hydrophilicity and chain polymerization reactivity to the vinyl monomer of the general formula (1), X is particularly preferably a single bond, -C(=O)-, $-C(=O)-O-(CH_2)_2-$, $-C(=O)-O-CH_2-CH(OH)-CH_2-$, $-C(=O)-NH-(CH_2)_3-$, or the like.

In the general formula (1), n represents 0 or 1.

When n is 0, $R^2$ is a hydrogen atom, an alkyl group having a carbon number of from 1 to 3, an acyl group having a carbon number of from 1 to 2, or an aldehyde group. The carbon number of the alkyl group is preferably from 1 to 2, and more preferably 1.

The alkyl group having a carbon number of from 1 to 3 for $R^2$ includes a methyl group, an ethyl group and an (iso)propyl group.

The acyl group having a carbon number of from 1 to 2 for $R^2$ may be any of straight-chain, branched chain or cyclic, and includes, for example, an alkylcarbonyl group. The alkylcarbonyl group includes, for example, an acetyl group.

The aldehyde group for $R^2$ includes, for example, a formyl group.

When n is 0, $R^2$ is preferably a hydrogen atom, an alkyl group having a carbon number of from 1 to 2 or an acyl group having a carbon number of from 1 to 2, and more preferably a hydrogen atom or a methyl group.

When n is 1, $R^2$ represents an alkylene group having a carbon number of from 1 to 3. The carbon number of the alkylene group is more preferably from 1 to 2, and further preferably 1.

The alkylene group having a carbon number of from 1 to 3 for $R^2$ includes a methylene group, an ethylene group and a propylene group.

The vinyl monomer represented by the general formula (1) is preferably at least one compound selected from the group consisting of a (meth)acrylic acid compound, a (meth)acrylamide compound, a styrene compound, a vinylamide(imide) compound, and an allyl compound.

Specific examples of the vinyl monomer represented by the general formula (1) include the following Compounds (a1) to (a7).

[Chem. 8]

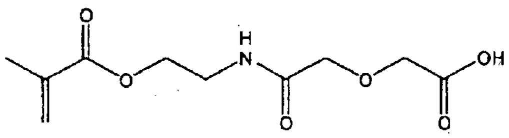

(a1)

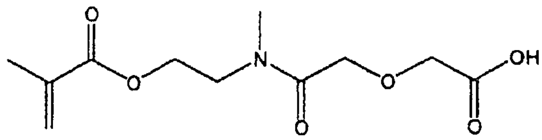

(a2)

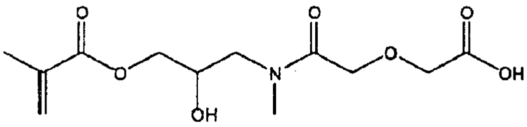

(a3)

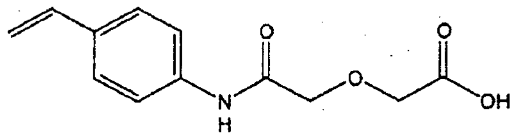

(a4)

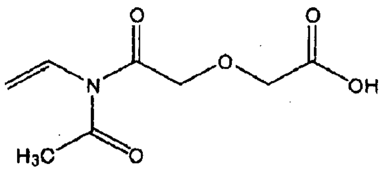

(a5)

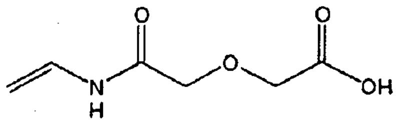

(a6)

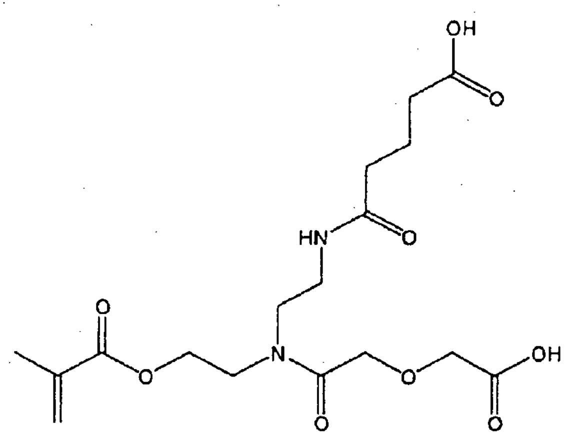

(a7)

The vinyl monomer represented by the general formula (1) can be produced by a condensation reaction between a vinyl monomer having at least one or more primary amines or secondary amines and diglycolic acid. As an activated acid component, diglycolic anhydride which is an acid anhydride is used. Furthermore, by using a symmetric acid anhydride, there is an advantage in that the half of the acid does not react with the amine.

As to the condensation reaction, the case of producing a styrene monomer having DGAA (DGAA styrene monomer) is described as an example.

[Chem. 9]

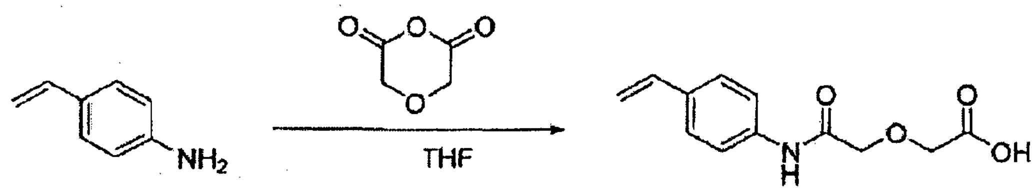


4-Aminostyrene

DGAA styrene monomer

For instance, 4-aminostyrene and diglycolic anhydride are allowed to react in an inert solvent, for example, tetrahydrofuran (THF) or dichloromethane under stirring, to obtain a reaction solution.

The resulting reaction solution is filtered, and the filtrate is concentrated and crystallized by adding an organic solvent such as hexane or heptane. The crystals deposited are collected by filtration, washed with heptane and dried, to obtain DGAA styrene monomer.

The thus obtained vinyl monomer represented by the general formula (1) is introduced into a polymer base material by a graft polymerization.

The material constituting the polymer base material includes, for example, a polyolefin resin, a water-insoluble vinyl alcohol resin, a polyamide resin, and a cellulose resin, and the polymer base material includes a nonwoven fabric, a woven fabric, a non-porous film (sheet), a porous film (sheet), a hollow fiber membrane, yarn, a bead, and the like each formed from the resin described above.

The graft polymerization method for forming the graft chain on the polymer base material is not particularly limited and includes, for example, a chemical graft polymerization method using a heat polymerization initiator such as a peroxide, a graft polymerization method using plasma, a photo-initiated graft polymerization method, and a radiation graft polymerization method. Among them, the radiation graft polymerization method, which does not require an initiator and provides deep penetration depth of treatment, is preferred because the reaction conditions are mild and the graft chain can be formed on the carrier base material without impairing the characteristics of the carrier base material.

The radiation graft polymerization method includes, for example, a method (pre-irradiation method) in which a carrier base material (polymer base material) is irradiated with radiation to generate free radicals (reaction initiation points) and then the carrier base material is brought into contact with a monomer composition to perform graft polymerization using the free radicals as the starting points, and a method (simultaneous irradiation method) in which radiation is irradiated in the state of coexisting a carrier base material and a monomer composition to perform graft polymerization. Since homopolymerization of the monomer is likely to occur simultaneously with the graft polymerization in the simultaneous irradiation method, it is preferred to use the pre-irradiation method.

As the pre-irradiation method, a polymer radical method in which the radiation is irradiated in an inert gas to perform the polymerization may be used or a peroxide method in which the radiation is irradiated in the presence of oxygen to perform the polymerization may be used.

The radiation used for the radiation graft polymerization includes, for example, $\alpha$ ray, $\beta$ ray, $\gamma$ ray, electron beam, accelerated electron beam, and X ray, and may be appropriately determined depending on the material, shape, thickness and the like of the carrier irradiated with the radiation. In general, $\gamma$ ray or electron beam is used in the present invention.

The $\gamma$ ray source includes cobalt, cesium, strontium, and the like. Since the cobalt $\gamma$ ray source has a large penetration depth so that a thickness of the object to be irradiated can be increased in comparison with the case of using electron beam, it can be suitably used in a method in which a long object wound in a roll form is irradiated by a batch process.

As the electron beam source, an accelerator such as Van de Graaff, a linac or a cyclotron is used. Furthermore, the electron beam source has the irradiation dose rate of 300 to 1,000 times higher than that of the $\gamma$ ray source so that short-time irradiation is possible, but since it has a small penetration depth, it can be suitably used in the case where a thin layer object is continuously irradiated by using a conveying device. Since the penetration depth of the accelerated electron beam depends on the acceleration voltage, the acceleration voltage can be appropriately set according to the thickness and the irradiation size of the object to be irradiated.

The irradiation dose of radiation is ordinarily from 10 to 500 kGy, and preferably from 15 to 200 kGy.

The radiation irradiation is usually performed at room temperature (10 to 40°C), and in order to suppress the attenuation of the generated radical, it can be performed in an inert gas (e.g., nitrogen or argon), if desired.

As the solvent used in the solution containing the vinyl monomer of the present invention, use can be made of water, an alcohol such as methanol, dimethylsulfoxide and dimethylformamide which are aprotic polar solvents, an ether,

or a mixed solution thereof. The concentration of the vinyl monomer of the present invention in the solution is usually from 10 to 80% by weight, and preferably from 20 to 50% by weight.

The reaction temperature and reaction time in the graft polymerization reaction step are not particularly limited, and may be appropriately set in consideration of a degree of radical generation in the carrier base material, the vinyl monomer used, the desired graft ratio, and the like. It can be conducted usually at from room temperature to 100°C, preferably from room temperature to 80°C, and usually for from 0.5 to 180 minutes, preferably from 1 to 60 minutes.

The weight graft ratio which indicates a degree of graft polymerization in the adsorption separation material can be obtained by the formula shown below.

Weight graft ratio (wt%) = (weight of base material after graft polymerization - weight of base material before graft polymerization)/(weight of base material before graft polymerization) × 100

In the method (i), a polyfunctional vinyl monomer may be contained in the monomer solution at the time of graft polymerization to cause a crosslinking reaction simultaneously with the graft polymerization. Because of forming a stable crosslinked structure, damage of the graft chain due to adsorption and desorption becomes small to be able to be used repeatedly. The polyfunctional vinyl monomer includes, for example, divinylbenzene, trimethylolpropane trimethacrylate, diallyl phthalate, triallyl isocyanurate, trimethylolpropane triacrylate, tetramethylolmethane triacrylate, tetraethylene glycol acrylate, and the like.

<Graft polymerization according to method (ii)>

Nest, the method of preparing the adsorption separation material by the method (ii) is described below.

In the method (ii), first, an amine is introduced into the polymer base material by graft polymerization. As the polymer base material, the base materials same as those used in the method (i) can be used.

The graft polymerization method for introducing an amino group into the polymer base material includes, for example, the chemical graft polymerization, graft polymerization method using plasma, photo-initiated graft polymerization method, and radiation graft polymerization method as described in the method (i) above.

The amine includes a primary amine and a secondary amine, and a vinyl monomer having such an amine can be used. The vinyl monomers may be used one kind alone or may be used two or more kinds in mixture.

The polymer base material in which an amino group is bonded by the graft polymerization method is subjected to a reaction with diglycolic anhydride.

Specifically, the polymer base material in which an amino group is bonded is immersed in a solution containing diglycolic anhydride and allowed to react in a temperature range of from room temperature to 60°C, preferably from room temperature to 40°C, for one hour or more, preferably 24 hours or more.

The solution in which the diglycolic anhydride is dissolved includes, for example, tetrahydrofuran (THF), dichloromethane and the like.

The resulting reaction solution is dried in a temperature range of from room temperature to 100°C, preferably from 40 to 60°C to obtain an adsorption separation material.

In the method (ii), a vinyl monomer having a reactive functional group may be introduced and bonded to a polymer base material by graft polymerization, and then the functional group may be subjected to an addition reaction with a compound having an amine.

(Adsorption and desorption of rare earth element to adsorption separation material)

A method for adsorbing and desorbing a rare earth element to the adsorption separation material of the present invention includes an adsorption step of bringing an aqueous solution containing a rare earth element into contact with the adsorption separation material of the present invention to allow the rare earth element to be adsorbed to the adsorption separation material, and a recovery step of bringing the adsorption separation material in which the rare earth element is adsorbed into contact with an aqueous acid solution to recover the rare earth element and to regenerate the adsorption separation material.

The rare earth element is preferably dissolved in an aqueous solvent, and the solution may be used by diluting appropriately. The solvent for dissolving the rare earth element includes, for example, water, a mixed solvent composed of water and a water-soluble organic solvent and the like. At the time of performing the adsorption step, the concentration of rare earth element in the aqueous solution containing the rare earth element is preferably from $10^{-6}$ to $10^{-1}$ mol/L, and more preferably from $10^{-5}$ to $10^{-2}$ mol/L.

Moreover, the adsorption step is preferably performed under an acidic condition, and pH of the aqueous solution containing the rare earth element is more preferably set from pH 0 to 6, and still more preferably from pH 1 to 3. By performing the adsorption step under an acidic condition, the rare earth element can be selectively adsorbed.
The adjustment of pH of the aqueous solution can be performed by adding sulfuric acid, nitric acid, hydrochloric acid, or the like.
In the adsorption step, the method of bringing the adsorption separation material of the present invention into contact with the aqueous solution containing the rare earth element is not particularly limited, and includes, for example, immersion.
As to the contact conditions between the adsorption separation material and the aqueous solution containing the rare earth element, the contact is performed in a temperature range of from room temperature to 80°C, preferably from room temperature to 60°C, for 15 minutes or more, preferably one hour or more.
In the recovery step, the adsorption separation material in which the rare earth element is adsorbed is brought into contact with an aqueous acid solution. By contacting with the aqueous acid solution, the rare earth element is eluted in the aqueous acid solution.
The aqueous acid solution may be appropriately prepared by using sulfuric acid, nitric acid, hydrochloric acid, or the like, and the aqueous acid solution having an acid concentration of approximately from 0.1 to 4 mol/L is preferably used, and the aqueous acid solution having an acid concentration of approximately from 0.5 to 2 mol/L is more preferred.
The method of bringing the adsorption separation material in which the rare earth element is adsorbed into contact with the aqueous acid solution is not particularly limited, and includes, for example, immersion.
As to the contact conditions between the adsorption separation material in which the rare earth element is adsorbed and the aqueous acid solution, the contact is performed in a temperature range of from room temperature to 80°C, preferably from room temperature to 60°C, for 15 minutes or more, preferably one hour or more.
In this way, the rare earth element is eluted in the aqueous acid solution, and the adsorption separation material is regenerated.

EXAMPLE

The present invention will be described more specifically with reference to Examples and Comparative Examples, but the present invention should not be construed as being limited to the following examples.

<Method for determining weight graft ratio in adsorption separation material>

The weight graft ratio was obtained by the formula shown below.

$$\text{Weight graft ratio (wt\%)} = (\text{weight of base material after graft polymerization} - \text{weight of base material before graft polymerization})/(\text{weight of base material before graft polymerization}) \times 100$$

<Measurement of bonding amount of DGAA in adsorption separation material>

It was obtained by the formula shown below by taking the change in mass of the base material before and after the DGAA bonding reaction as W.

$$\text{Bonding amount of DGAA (mmol/g)} = (\text{W(mg)/molecular weight of reaction substrate (mg/mmol)/ mass of base material after reaction (g)}$$

(Example 1)

<Synthesis of DGAA-vinyl monomer>

In 120 ml of THF was dissolved 16.5 g (0.1 mol) of 2-aminoethyl methacrylate hydrochloride, and under cooling with ice 15.2 g (0.15 mol) of TEA was poured thereto. Thereto was dropwise added 80 ml of a THF solution containing 11.6 g (0.1 mol) of diglycolic anhydride while maintaining at 10°C or less, and the mixture was then back to room temperature and continued to stir overnight (about 12 hours).
The reaction solution was filtered, the filtrate was passed as it was through a silica gel column, THF was flushed

as an eluent, and the fraction eluted was concentrated. Toluene was added to the resulting concentrate to crystallize and the crystals deposited were collected by filtration. The resulting crystals were washed with toluene and dried to obtain DGAA-methacrylate.

<Preparation of adsorption separation material>

A vinylon nonwoven fabric was used as a polymer base material, and a 50 wt% aqueous solution of the DGAA-methacrylate obtained above was used as a monomer solution. In order to remove dissolved oxygen in the monomer solution, the solution was bubbled for one hour with nitrogen gas.
The polymer base material was irradiated with electron beam of 90 kGy, and the polymer base material irradiated was promptly immersed into the monomer solution. The polymer base material and the monomer solution were allowed to react at 50°C for 15 minutes thereby bonding a graft chain to the polymer base material. Then, after thoroughly washing with pure water, the polymer base material was dried at 40°C for one hour or more to obtain an adsorption separation material.
The weight graft ratio was 136 wt% and the bonding amount of DGAA was 2.35 mmol/g.

(Example 2)

<Introduction of amine into polymer base material>

A polyethylene nonwoven fabric was used as a polymer base material, and glycidyl methacrylate (GMA) was used as a monomer solution. In order to remove dissolved oxygen in the monomer solution, the solution was bubbled for one hour with nitrogen gas.
The polymer base material was irradiated with electron beam of 90 kGy, and the polymer base material irradiated was promptly immersed into the monomer solution. The polymer base material was allowed to react with the monomer solution at 70°C for 4 minutes thereby bonding a graft chain to the polymer base material. Then, after thoroughly washing with pure water, the polymer base material was dried at 40°C for one hour or more to obtain a GMA-bonding base material. The weight graft ratio was 97% by weight.
Then, the GMA-bonding base material was immersed in ethylenediamine and allowed to react at 60°C for 6 hours. The resulting reactant was sequentially washed thoroughly with ethanol and pure water, dried at 60°C under a reduced pressure to obtain a base material in which an amino group was bonded.

<Preparation of adsorption separation material>

The thus obtained base material in which an amino group was bonded was immersed in a dichloromethane solution of diglycolic anhydride (concentration of 98 g/L) and allowed to react at 25°C for 3 days. The resulting reactant was sequentially washed thoroughly with dichloromethane, ethanol and water, and dried at 60°C under a reduced pressure to obtain an adsorption separation material. The bonding amount of DGAA was 1.96 mmol/g.

(Comparative Example 1)

<Preparation of adsorption separation material>

To 5 ml of dichloromethane was added 0.4887 g of diglycolic anhydride, and after mixing, 1 g of 3-aminopropyl silica gel was added thereto and allowed to react at 298 K for 3 days.
The resulting reactant was collected by filtration, sequentially washed thoroughly with dichloromethane, ethanol and water, and dried at 60°C under a reduced pressure to obtain an adsorption separation material. The bonding amount of DGAA was 0.55 mmol/g.

(Experimental Example 1: Adsorption test of rare earth element)

Each of a chloride salt of dysprosium and a chloride salt of neodymium, as rare earth elements, and chloride salts of copper, iron (III) and zinc, as base metals, was dissolved in distilled water to be 1 mM, and pH was adjusted to 1, 2 or 2.5 with hydrochloric acid, thereby obtaining each adsorption test aqueous solution.
Each of the prepared adsorption separation materials was added to each of the adsorption test aqueous solutions, and an adsorption test was performed with shaking at about 25°C for one day.
After the adsorption test, the solution was collected and filtered through a membrane filter of 0.20 μm, and a metal ion concentration in the aqueous solution was measured by an ICP emission spectrometer (ICPE-9000 produced

by Shimadzu Corp.) to calculate the adsorption amount (mmol/g) of metal ion from the mass balance.

The results are shown in FIG. 1.

(Experimental Example 2)

<Adsorption amount test of dysprosium>

A chloride salt of dysprosium was dissolved in distilled water so that the concentration at the initial pH of 1 was 0.5, 1, 2, or 5 mM, and that at the initial pH of 3 was 1, 2, 5, or 6 mM, thereby obtaining each adsorption test aqueous solution. Hydrochloric acid was used for the adjustment of pH.

Each of the adsorption separation materials prepared in Example 1 and Comparative Example 1 was added to each of the adsorption test aqueous solutions, and an adsorption test was performed with shaking at about 25°C for one day.

After the adsorption test, the solution was collected and filtered through a membrane filter of 0.20 μm, and a metal ion concentration in the aqueous solution was measured by an ICP emission spectrometer (ICPE-9000 produced by Shimadzu Corp.) to calculate the adsorption amount (mmol/g) of dysprosium from the mass balance.

The results are shown in FIG. 2.

From the results of FIG. 1, it was found that the adsorption separation materials of Examples 1 and 2 were excellent in the adsorption ability of rare earth elements (dysprosium and neodymium) at each pH in comparison with the adsorption separation material of Comparative Example 1. Furthermore, from the results of FIG. 2, it was found that the adsorption separation material of Examples 1 was able to adsorb a larger amount of dysprosium than the adsorption separation material of Comparative Example 1.

INDUSTRIAL APPLICABILITY

By using the adsorption separation material of the present invention, rare earth elements can be selectively adsorbed, and in addition, the apparatus and operation are simple so that it is effective for separation and recovery of rare earth elements from natural mineral resources of low grade and wastes.

## Claims

1. An adsorption separation material for selectively recovering a rare earth element dissolved in an aqueous solution, wherein at least one diglycolamic-acid-type ligand represented by the following general formula (2) is bonded to a polymer base material by graft polymerization:

[Chem. 1]

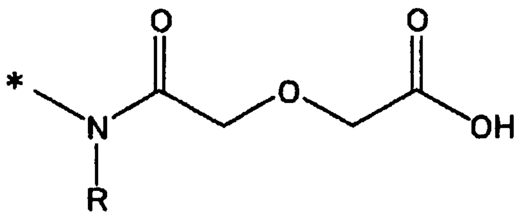

(2)

in the formula (2), R represents a hydrogen atom, an alkyl group having a carbon number of from 1 to 3, an acyl group having a carbon number of from 1 to 2, or an aldehyde group, and * represents a bond, and wherein the polymer base material is formed from at least one selected from the group consisting of a polyolefin resin, a water-insoluble vinyl alcohol resin, a polyamide resin, and a cellulose resin.

2. The adsorption separation material according to Claim 1, wherein both a secondary amide represented by the following general formula (2a) and a tertiary amide represented by the following general formula (2b) are bonded to the polymer base material:

[Chem. 2]

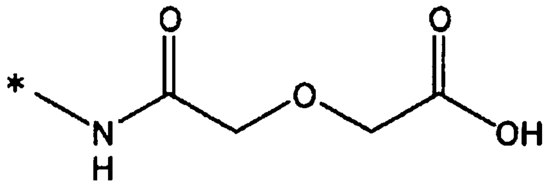

(2a)

in the formula (2a), * represents a bond; and

[Chem. 3]

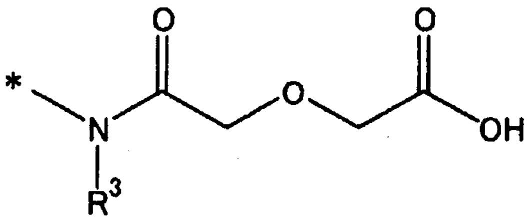

(2b)

in the formula (2b), $R^3$ represents an alkyl group having a carbon number of from 1 to 3, an acyl group having a carbon number of from 1 to 2, or an aldehyde group, and * represents a bond.

**3.** The adsorption separation material according to Claim 1 or 2, wherein the polymer base material is at least one selected from the group consisting of a nonwoven fabric, a woven fabric, a non-porous film, a non-porous sheet, a porous film, a porous sheet, a hollow fiber membrane, yarn, and a bead.

**4.** An adsorption desorption method of rare earth element comprising:

an adsorption step of bringing an aqueous solution containing a rare earth element into contact with the adsorption separation material as described in any one of Claims 1 to 3 to allow the rare earth element to be adsorbed to the adsorption separation material; and
a recovery step of bringing the adsorption separation material in which the rare earth element is adsorbed into contact with an aqueous acid solution to recover the rare earth element and to regenerate the adsorption separation material.

**Patentansprüche**

**1.** Adsorptionstrennungsmaterial zur selektiven Rückgewinnung eines Seltenerdelements, das in einer wässrigen Lösung gelöst ist,
wobei mindestens ein Ligand vom Diglycolamidsäure-Typ, dargestellt durch die folgende allgemeine Formel (2), durch Pfropfpolymerisation an ein Polymerbasismaterial gebunden ist:

[Chem. 1]

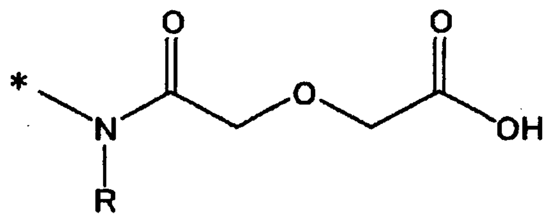

(2)

in der Formel (2) stellt R ein Wasserstoffatom, eine Alkylgruppe mit einer Kohlenstoffanzahl von 1 bis 3, eine Acylgruppe mit einer Kohlenstoffanzahl von 1 bis 2 oder eine Aldehydgruppe dar und * stellt eine Bindung dar, und wobei das Polymerbasismaterial aus mindestens einem, ausgewählt aus der Gruppe, bestehend aus einem Polyolefinharz, einem wasserunlöslichen Vinylalkoholharz, einem Polyamidharz und einem Celluloseharz, gebildet ist.

**2.** Adsorptionstrennungsmaterial nach Anspruch 1, wobei sowohl ein sekundäres Amid, dargestellt durch die folgende allgemeine Formel (2a), als auch ein tertiäres Amid, dargestellt durch die folgende allgemeine Formel (2b), an das Polymerbasismaterial gebunden sind:

[Chem. 2]

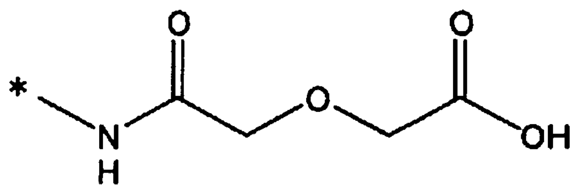

(2a)

in der Formel (2a) stellt * eine Bindung dar; und

[Chem. 3]

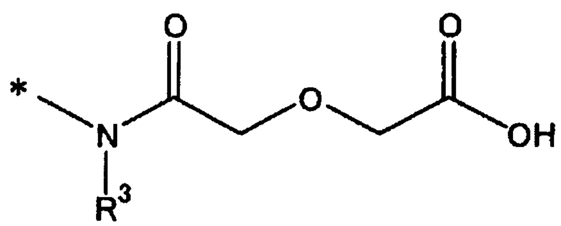

(2b)

in der Formel (2b) stellt $R^3$ eine Alkylgruppe mit einer Kohlenstoffanzahl von 1 bis 3, eine Acylgruppe mit einer Kohlenstoffanzahl von 1 bis 2 oder eine Aldehydgruppe dar und * stellt eine Bindung dar.

**3.** Adsorptionstrennungsmaterial nach Anspruch 1 oder 2, wobei das Polymerbasismaterial mindestens eines, ausgewählt aus der Gruppe, bestehend aus einem Vliesstoff, einem gewebten Stoff, einem nichtporösen Film, einer nichtporösen Folie, einem porösen Film, einer porösen Folie, einer Hohlfasermembran, Garn und einer Kugel, ist.

**4.** Adsorptionsdesorptionsverfahren von einem Seltenerdelement, umfassend:
einen Adsorptionsschritt des Inkontaktbringens einer wässrigen Lösung, die ein Seltenerdelement enthält, mit dem Adsorptionstrennungsmaterial nach einem der Ansprüche 1 bis 3, um zu ermöglichen, dass das Seltenerdelement an das Adsorptionstrennungsmaterial adsorbiert wird; und

einen Rückgewinnungsschritt des Inkontaktbringens des Adsorptionstrennungsmaterials, in dem das Seltenerdelement adsorbiert ist, mit einer wässrigen Säurelösung, um das Seltenerdelement zurückzugewinnen und das Adsorptionstrennungsmaterial zu regenerieren.

## Revendications

1. Matériau de séparation par adsorption destiné à récupérer sélectivement un élément de terres rares dissous dans une solution aqueuse,
dans lequel au moins un ligand de type acide diglycolamique représenté par la formule générale (2) suivante est lié à un matériau de base polymère par polymérisation par greffage :

[Schéma 1]

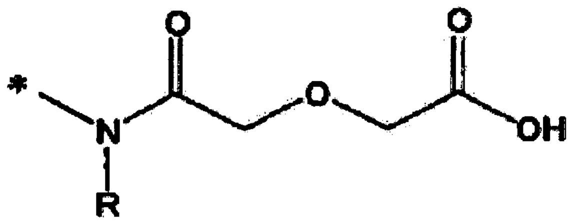

(2)

dans la formule (2), R représente un atome d'hydrogène, un groupe alkyle ayant un nombre de carbones de 1 à 3, un groupe acyle ayant un nombre de carbones de 1 à 2, ou un groupe aldéhyde, et * représente une liaison, et dans lequel le matériau de base polymère est formé à partir d'au moins un élément choisi dans le groupe consistant en une résine de polyoléfine, une résine d'alcool vinylique insoluble dans l'eau, une résine de polyamide, et une résine de cellulose.

2. Matériau de séparation par adsorption selon la revendication 1, dans lequel un amide secondaire représenté par la formule générale (2a) suivante et un amide tertiaire représenté par la formule générale (2b) suivante sont tous deux liés au matériau de base polymère :

[Schéma 2]

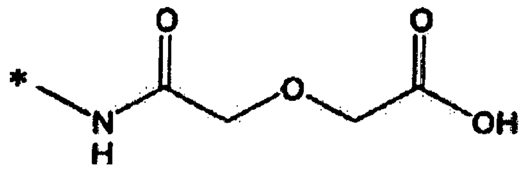

(2a)

dans la formule (2a), * représente une liaison ; et

[Schéma 3]

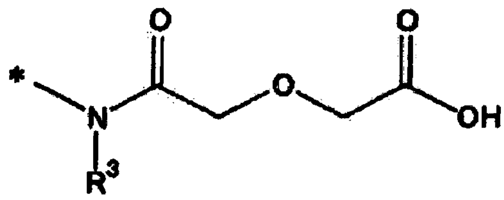

(2b)

dans la formule (2b), $R^3$ représente un groupe alkyle ayant un nombre de carbones de 1 à 3, un groupe acyle ayant un nombre de carbones de 1 à 2, ou un groupe aldéhyde, et * représente une liaison.

**3.** Matériau de séparation par adsorption selon la revendication 1 ou 2, dans lequel le matériau de base polymère est au moins un élément choisi dans le groupe consistant en un non-tissé, un tissu, un film non poreux, une feuille non poreuse, un film poreux, une feuille poreuse, une membrane à fibres creuses, un fil, et une perle.

**4.** Procédé d'adsorption-désorption d'un élément de terres rares comprenant :

une étape d'adsorption consistant à amener une solution aqueuse contenant un élément de terres rares en contact avec le matériau de séparation par adsorption tel que décrit dans l'une quelconque des revendications 1 à 3 pour permettre à l'élément de terres rares d'être adsorbé sur le matériau de séparation par adsorption ; et une étape de récupération consistant à amener le matériau de séparation par adsorption dans lequel l'élément de terres rares est adsorbé en contact avec une solution aqueuse acide pour récupérer l'élément de terres rares et pour régénérer le matériau de séparation par adsorption.

[FIG. 1]

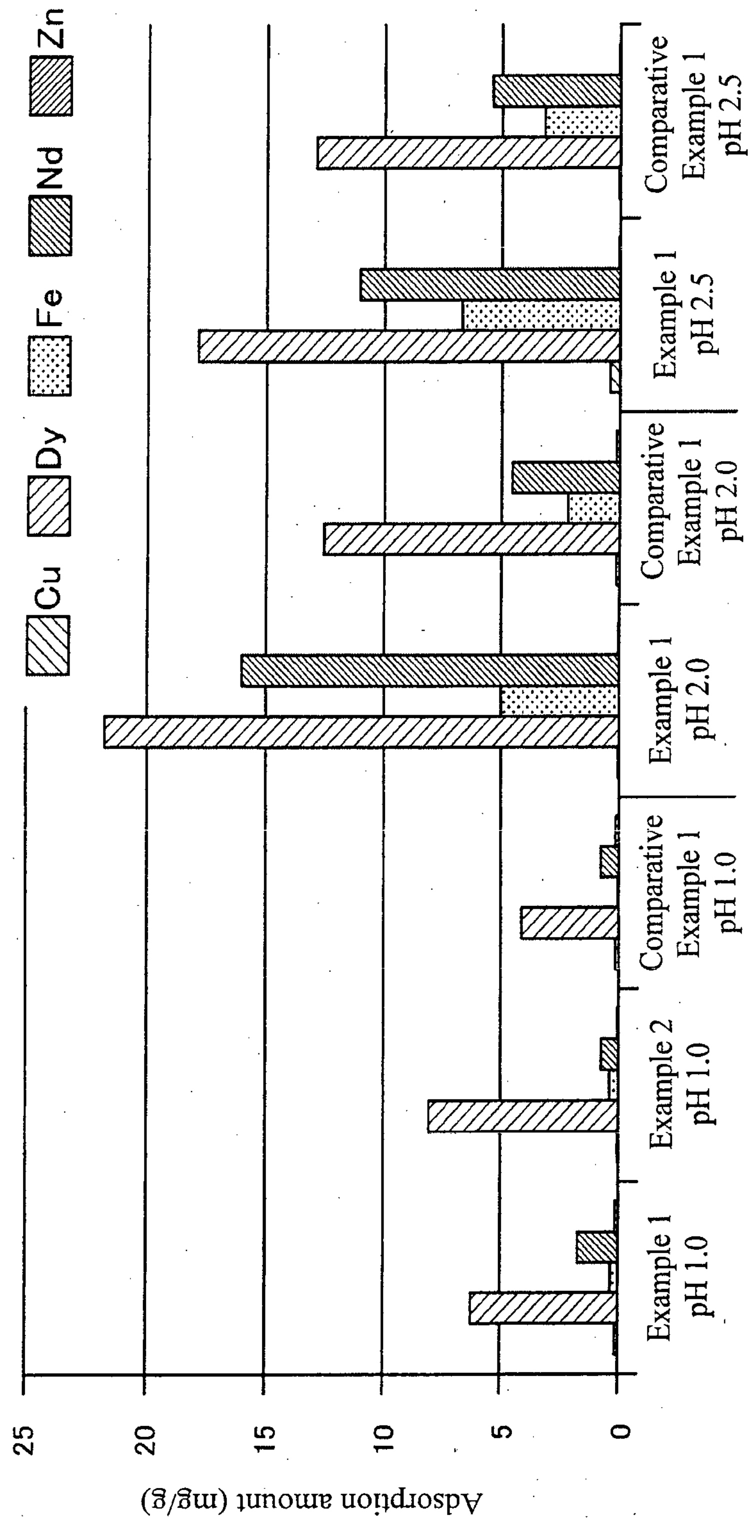
Cu
Dy
Fe
Nd
Zn
Adsorption amount (mg/g)
0
5
10
15
20
25
Example 1 pH 1.0
Example 2 pH 1.0
Comparative Example 1 pH 1.0
Example 1 pH 2.0
Comparative Example 1 pH 2.0
Example 1 pH 2.5
Comparative Example 1 pH 2.5

[FIG. 2]

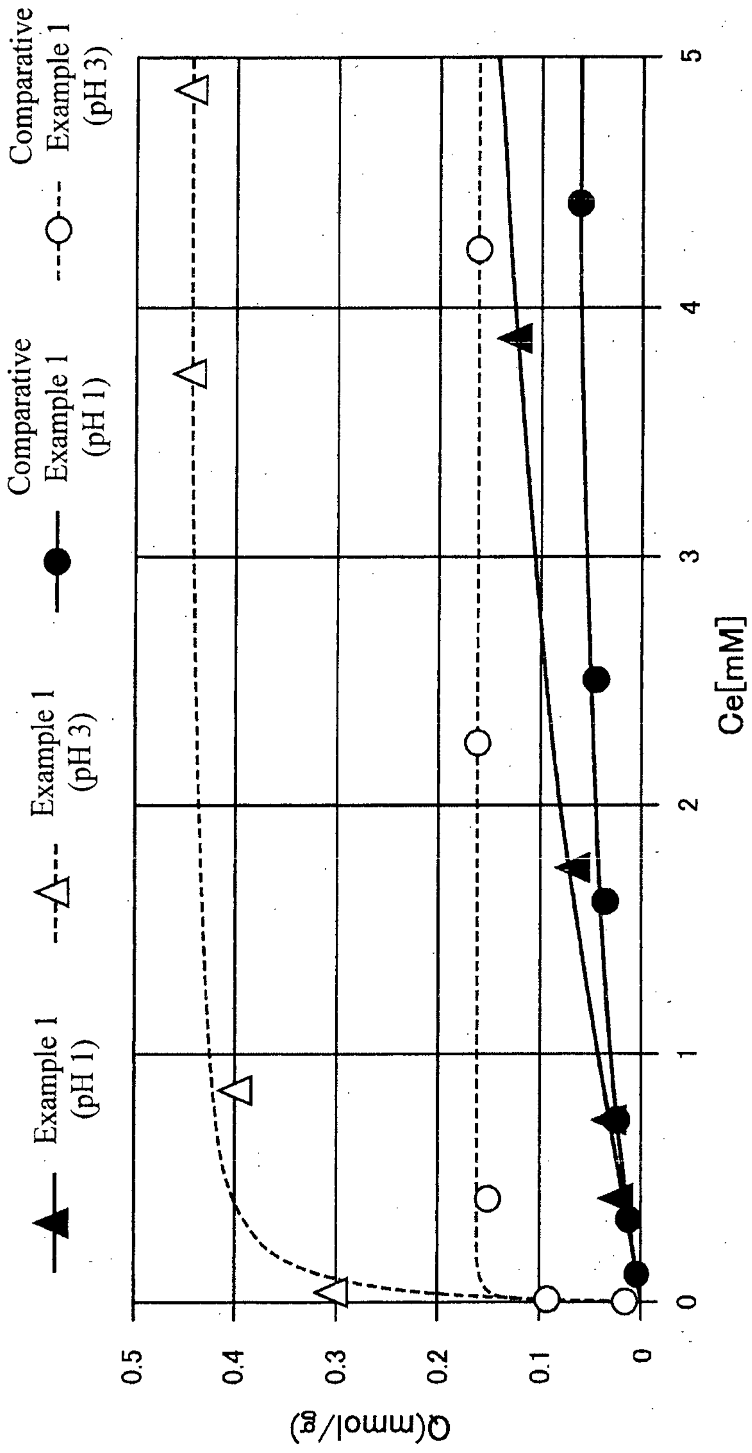
Example 1 (pH 1)
Example 1 (pH 3)
Comparative Example 1 (pH 1)
Comparative Example 1 (pH 3)
Q(mmol/g)
0
0.1
0.2
0.3
0.4
0.5
Ce[mM]
0
1
2
3
4
5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007327085 A


### Non-patent literature cited in the description


- Diglycolamic acid functionalized PAMAM-SDB chelating resin for removal of Th(IV) from aqueous and nitric acid medium. **ILAIYARAJA P. et al.** SESTEC-2014: DAE-BRNS biennial symposium on emerging trends in separation science and technology. Board of Research in Nuclear Sciences, 01 February 2014, 25-28
- Separation and recovery of rare earth element ions by novel adsorbent. **TSUYOSHI OGATA ; MIKIYA TANAKA.** Rare Earth. The Rare Earth Society of Japan, May 2013, 178-179